(19) Europäisches Patentamt
European Patent Office
Office européen des brevets

(11) EP 4 755 185 A1

(12) EUROPEAN PATENT APPLICATION
published in accordance with Art. 153(4) EPC

(43) Date of publication:
**10.06.2026 Bulletin 2026/24**

(21) Application number: **24851766.6**

(22) Date of filing: **02.08.2024**

(51) International Patent Classification (IPC):
***A01N 37/44*** *(2006.01)* ***A01N 43/50*** *(2006.01)*
***A01P 3/00*** *(2006.01)*

(52) Cooperative Patent Classification (CPC):
**A01N 37/44; A01N 43/50; A01P 3/00**

(86) International application number:
**PCT/JP2024/027698**

(87) International publication number:
**WO 2025/033341 (13.02.2025 Gazette 2025/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.08.2023 JP 2023127457**

(71) Applicants:
- **NATIONAL UNIVERSITY CORPORATION TOKAI NATIONAL HIGHER EDUCATION AND RESEARCH SYSTEM**
  **Nagoya-shi, Aichi 464-8601 (JP)**
- **OAT Agrio Co., Ltd.**
  **Tokyo 101-0052 (JP)**

(72) Inventors:
- **SHIMIZU, Masafumi**
  **Gifu-shi, Gifu 501-1193 (JP)**
- **NISHIOKA, Tomoki**
  **Gifu-shi, Gifu 501-1193 (JP)**
- **SOTOYAMA, Kou**
  **Tokyo 101-0052 (JP)**
- **SUMIYOSHI, Hayato**
  **Naruto-shi, Tokushima 772-0021 (JP)**
- **MIMURA, Naoki**
  **Naruto-shi, Tokushima 779-0301 (JP)**

(74) Representative: **Hasegawa, Kan**
**Patentanwaltskanzlei Hasegawa**
**Untere Hauptstraße 56**
**85354 Freising (DE)**

# (54) SOIL DISEASE INHIBITOR

(57) It is an object of the present invention to provide an agent for inhibiting soil diseases that is capable of effectively inhibiting the onset of soil diseases and is highly safe. The present invention relates to an agent for inhibiting soil diseases comprising S-allylcysteine or a salt thereof. The agent for inhibiting soil diseases according to the present invention preferably further comprises an amino acid or a salt thereof. Soil diseases can be inhibited by applying the agent for inhibiting soil diseases of the present invention to a soil.

## Description

Technical Field

The present invention relates to an agent for inhibiting soil diseases.

Background Art

Plants may suffer from various diseases due to plant pathogens such as bacteria, fungi, and viruses. The term "soil diseases", which is one of plant diseases and also called "soil-borne diseases", is a collective term for diseases in which plant pathogens living in soil infest roots or stems of crops cultivated in the soil to cause root rot, yellowing of the aboveground portions, wilting, damping-off, and the like.

Soil diseases occur more frequently when the same crop is cultivated in succession. This is because the plant pathogens form a large number of durable forms such as sclerotia, which remain in the soil, and when the same crop is cultivated, the pathogens infest the crop again, resulting in a rapid increase in the pathogen density. The occurrence of these soil diseases is recently the most major cause of continuous cropping obstacles, which are problems in vegetable cultivation regions. Moreover, since there are few chemicals effective against the soil diseases, the soil diseases are difficult to control and thus, are extremely serious diseases in agriculture.

Examples of countermeasures made for inhibiting soil diseases such as *Fusarium* wilt disease and bacterial wilt disease include cultivation of resistant varieties or resistant grafted seedlings; and soil fumigation using chemical fumigants. However, in the cultivation of resistant varieties or resistant grafted seedlings, pathogenic races that break through the disease resistance of the resistant varieties or resistant grafted seedlings often appear, which prevents inhibition of disease development. On the other hand, soil fumigation using chemical fumigants has problems in that the chemical fumigants used are generally highly toxic and have a large environmental burden, and that the effect against *Fusarium* wilt disease or bacterial wilt disease is unstable. Therefore, there is a desire for the development of an agent for inhibiting soil diseases that is capable of effectively inhibiting the onset of soil diseases, is safe, and has a small environmental burden.

Furthermore, the possibility of biological control with antagonistic microorganisms has begun to be discussed. For example, Patent Literature 1 describes a soil disease-inhibiting agent having the function of selectively and surprisingly growing microorganisms having an excellent antagonistic ability against the potato scab pathogen in soil, and simultaneously inhibiting the growth of the pathogen.

However, Patent Literature 1 discloses only the inhibitory effect on the pathogen of potato scab, and does not disclose any effect on other soil diseases.

Therefore, there is a need for an agent for inhibiting soil diseases that is capable of more effectively inhibiting the onset of soil diseases and is highly safe.

Citation List

Patent Literature

Patent Literature 1: JP-A-H6-287097

Summary of Invention

Technical Problem

Therefore, it is an object of the present invention to provide an agent for inhibiting soil diseases that is capable of effectively inhibiting the onset of soil diseases and is highly safe.

Solution to Problem

As a result of their extensive research to solve the aforementioned problem, the inventors of the present invention have found that S-allylcysteine or a salt thereof is capable of effectively inhibiting the onset of soil diseases. The present invention has been completed as a result of further research based on these findings.

In summary, the present invention is as itemized below:

Item 1. An agent for inhibiting soil diseases comprising S-allylcysteine or a salt thereof.

Item 2. The agent for inhibiting soil diseases according to item 1, further comprising an amino acid or a salt thereof.

Item 3. The agent for inhibiting soil diseases according to item 2, wherein the amino acid or salt thereof is an amino acid having a charged side chain and/or an amino acid having a polar uncharged side chain or a salt thereof.
Item 4. The agent for inhibiting soil diseases according to item 3, wherein the amino acid having a charged side chain or salt thereof is glutamic acid or a salt thereof.
Item 5. The agent for inhibiting soil diseases according to item 3, wherein the amino acid having a polar uncharged side chain or salt thereof is one or more amino acids selected from the group consisting of cysteine, serine, and asparagine, or salts thereof.
Item 6. The agent for inhibiting soil diseases according to item 2, wherein the amino acid or salt thereof contains one or more amino acids selected from the group consisting of cysteine, glutamic acid, serine, and asparagine, or salts thereof.
Item 7. A method for inhibiting soil diseases, comprising supplying the agent for inhibiting soil diseases according to any one of items 1 to 6 to a plant or a vicinity thereof.
Item 8. A method for treating a plant or a vicinity thereof with the agent for inhibiting soil diseases according to any one of items 1 to 6.
Item 9. A method for enhancing a soil disease-inhibitory effect, by using an amino acid or a salt thereof with an agent for inhibiting soil diseases comprising S-allylcysteine or a salt thereof.
Item 10. A method of using S-allylcysteine or a salt thereof for inhibiting soil diseases.
Item 11. A method of using S-allylcysteine or a salt thereof and an amino acid or a salt thereof for inhibiting soil diseases.
Item 12. A method of using an agrochemical formulation comprising S-allylcysteine or a salt thereof and an amino acid or a salt thereof for inhibiting soil diseases.
Item 1-1. An agent for inhibiting soil diseases comprising S-allylcysteine or a salt thereof.
Item 2-1. The agent for inhibiting soil diseases according to item 1-1, further comprising an amino acid or a salt thereof.
Item 3-1. The agent for inhibiting soil diseases according to item 2-1, wherein the amino acid or salt thereof is an amino acid having a charged side chain and/or an amino acid having a polar uncharged side chain or a salt thereof.
Item 4-1. The agent for inhibiting soil diseases according to item 3-1, wherein the amino acid having a charged side chain or salt thereof is glutamic acid or a salt thereof.
Item 5-1. The agent for inhibiting soil diseases according to item 3-1 or 4-1, wherein the amino acid having a polar uncharged side chain or salt thereof is one or more amino acids selected from the group consisting of cysteine, serine, and asparagine, or salts thereof.
Item 6-1. The agent for inhibiting soil diseases according to any one of items 2-1 to 5-1, wherein the amino acid or salt thereof contains one or more amino acids selected from the group consisting of cysteine, glutamic acid, serine, and asparagine, or salts thereof.
Item 7-1. A method for inhibiting soil diseases, comprising supplying the agent for inhibiting soil diseases according to any one of items 1-1 to 6-1 to a plant or a vicinity thereof.
Item 8-1. A method for treating a plant or a vicinity thereof with the agent for inhibiting soil diseases according to any one of items 1-1 to 6-1.
Item 9-1. A method for enhancing a soil disease-inhibitory effect, by using an amino acid or a salt thereof with an agent for inhibiting soil diseases comprising S-allylcysteine or a salt thereof.
Item 10-1. A method of using S-allylcysteine or a salt thereof for inhibiting soil diseases.
Item 11-1. A method of using S-allylcysteine or a salt thereof and an amino acid or a salt thereof for inhibiting soil diseases.
Item 12-1.
A method of using an agrochemical formulation comprising S-allylcysteine or a salt thereof and an amino acid or a salt thereof for inhibiting soil diseases.

Advantageous Effects of Invention

According to the present invention, it is possible to provide an agent for inhibiting soil diseases that is capable of effectively inhibiting the onset of soil diseases and is highly safe.
Furthermore, according to the present invention, it is possible to provide an agent for inhibiting soil diseases free from phytotoxicity symptoms.

Brief Description of Drawings

FIG. 1 shows photographs used instead of figures, showing how *Fusarium* wilt disease of cucumber was inhibited by an agent for inhibiting *Fusarium* diseases, in cucumber seedlings grown in different types of soils.

Description of Embodiments

The agent for inhibiting soil diseases according to the present invention will be hereinafter described.

The agent for inhibiting soil diseases of the present invention comprises S-allylcysteine or a salt thereof. S-allylcysteine is a product of protein degradation and is one of amino acids.

Naturally occurring S-allylcysteine generally has a chemical structure represented by the following general formula, and has the official name of "S-allyl-L-cysteine".

[Formula 1]

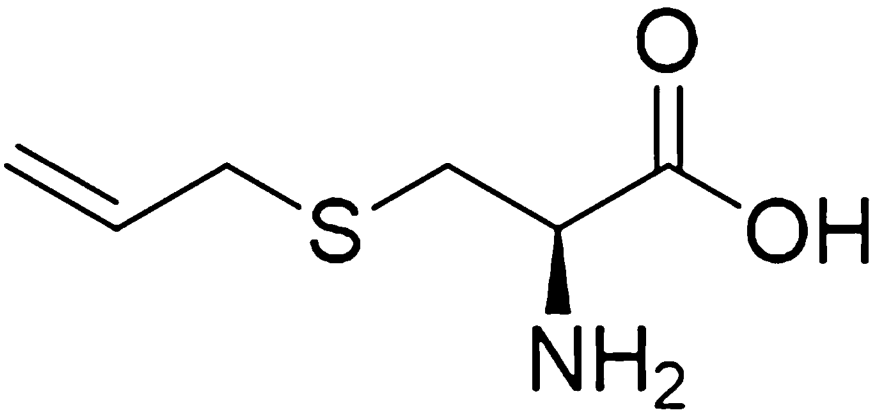

In the present invention, S-allylcysteine may be not only S-allylcysteine with the structure shown above, but also an optical isomer thereof, or a mixture of optical isomers.

As used herein, the form of the salt is not specifically limited, and the counterion may be a cation or an anion. Examples of the salt include ammonium salts and the like; alkali metal salts (such as sodium, potassium, and lithium salts), alkaline earth metal salts (such as calcium salt), salts of metals other than alkali metals and alkaline earth metals (such as magnesium, aluminum, iron, zinc, copper, and nickel salts), halides (such as fluorides and chlorides), carboxylic acid salts (such as acetic acid salt), and organic amine salts (such as dibenzylamine, glucosamine, ethylenediamine, diethylamine, triethylamine, dicyclohexylamine, diethanolamine, and tetramethylammonium salts).

The agent for inhibiting soil diseases of the present invention preferably comprises an alkali metal salt of S-allylcysteine as the salt of S-allylcysteine, and more preferably comprises the sodium salt of S-allylcysteine.

S-allylcysteine is one of amino acids known to be contained in garlic, and its safety has been confirmed. Therefore, application of the agent for inhibiting soil diseases comprising S-allylcysteine or a salt thereof to soil cultivation or the like has no adverse effect on the environment.

Moreover, S-allylcysteine or a salt thereof is less expensive than conventionally known plant disease control agents, so that agricultural producers can feel at ease in using the agent for inhibiting soil diseases of the present invention. Furthermore, the agent for inhibiting soil diseases of the present invention can be used by a very simple method such as drenching.

S-allylcysteine or a salt thereof can be produced by a known method. For example, S-allylcysteine can be produced by a method including a heating step of heating, at a specific temperature of 20 to 75°C, at least one selected from the group consisting of a plant of the genus *Allium,* juice of the plant, and an extract of the plant in which endogenous alliinase has been subjected to inactivation treatment. As used herein, alliinase is an enzyme endogenous to plants of the genus *Allium,* and is known to convert alliin contained in plants of the genus *Allium* into allicin, which is an odorous component. By using, as a raw material, a plant of the genus *Allium* or the like in which endogenous alliinase has been subjected to inactivation treatment, a decrease in alliin content in the raw material can be inhibited. Furthermore, the production of allicin can be inhibited, which can reduce the characteristic odor of the plant of the genus *Allium.*

Seven-hundred or more types of plants are known as plants of the genus *Allium,* and any of these plants that can produce S-allylcysteine may be used as the raw-material plant of the genus *Allium.* The plant of the genus *Allium* is preferably one containing alliin. Specific examples of the plant of the genus *Allium* include garlic *(Allium sativum L.),* onion *(Allium cepa L.), Allium victorialis subsp. platyphyllum, Allium monanthum, Allium tuberosum, Allium togashii, Allium virgunculae, Allium kiiense, Allium splendens, Allium macrostemon, Allium thunbergii, Allium schoenoprasum L., Allium schoenoprasum var. schoenoprasum, Allium schoenoprasum var. yezomonticola, Allium schoenoprasum var. sibutsuense, Allium schoenoprasum var. orientale, Allium schoenoprasum L. var. idzuense,* tree onion *(Allium cepa var. proliferum),* Welsh onion *(Allium fistulosum), Allium proliferum, Allium ampeloprasum, Allium chinense G. Don, Allium*

*chinense syn. Allium bakeri,* shallot *(Allium cepa L. var. aggregatum),* green onion *(Allium fistulosum),* chives, *Allium fistulosum var. viviparum,* and white long onion *(Allium fistulosum).* Of these, garlic *(Allium sativum L.),* onion *(Allium cepa L.), Allium schoenoprasum L., Allium chinense G. Don, Allium victorialis subsp. platyphyllum,* and the like are preferred, and garlic *(Allium sativum* L.) is more preferred, because they contain a sulfur-containing amino acid such as alliin at a high concentration. These plants of the genus *Allium* may be used alone or in combinations of two or more.

The plant of the genus *Allium* as is after being subjected to inactivation treatment may be subjected to the heating step, or alternatively, cut pieces, a crushed product, a ground product, powder, or the like of the plant after being subjected to inactivation treatment may be subjected to the heating step. The cut pieces, crushed product, ground product, or powder of the plant of the genus *Allium* can be obtained by cutting, crushing, grinding, or powdering the plant of the genus *Allium.* The method of cutting, crushing, grinding, or powdering is not specifically limited as long as it is a known cutting, crushing, grinding, or powdering method. For example, the cut pieces, crushed product, ground product, or powder of the plant can be suitably obtained by cutting, crushing, grinding, or powdering the plant using a crusher, a mixer, a food processor, a pulper finisher, or the like.

The juice of the plant of the genus *Allium* can be prepared using, for example, a filter press, a juicer mixer, or the like. The juice can also be prepared by filtering the ground product through a filter cloth or the like. The cut pieces, crushed product, ground product, and juice of the plant of the genus *Allium* may be a dilution or a concentrate. The dilution may, for example, be a dilution obtained by diluting the cut pieces, crushed product, ground product, juice, or the like of the plant about 1- to 50-fold with water. The concentrate may, for example, be a concentrate obtained by concentrating the cut pieces, crushed product, ground product, juice, or the like of the plant 1- to 100-fold, by means of freeze concentration, vacuum concentration, or the like. The cut pieces, crushed product, ground product, juice, or the like of the plant of the genus *Allium* may be frozen.

S-allylcysteine can be efficiently obtained by heat-treating the plant of the genus *Allium* or the like in which endogenous alliinase has been subjected to inactivation treatment. By heat-treating, at the above-mentioned specific temperature, the plant of the genus *Allium* or the like in which endogenous alliinase has been subjected to inactivation treatment, S-allylcysteine can be efficiently obtained without adding a reducing agent or the like (for example, an enzyme, a reducing compound, or the like) for reducing alliin in the plant of the genus *Allium.*

Alliin is one of sulfur-containing amino acids, is a derivative of cysteine, and is a natural sulfoxide contained in fresh plants of the genus *Allium,* such as garlic. For example, alliin is converted to allicin by alliinase when fresh garlic is cut or grated. Allicin is responsible for the unique aroma of garlic. Naturally occurring alliin generally has a structure represented by the following general formula, and has the official name of L-alliin. Alliin contains asymmetric centers at the 2-position carbon atom and the sulfur atom, and theoretically has four isomers; but in nature, it has two isomers, i.e., (+)-L-alliin and (-)-L-alliin.

[Formula 2]

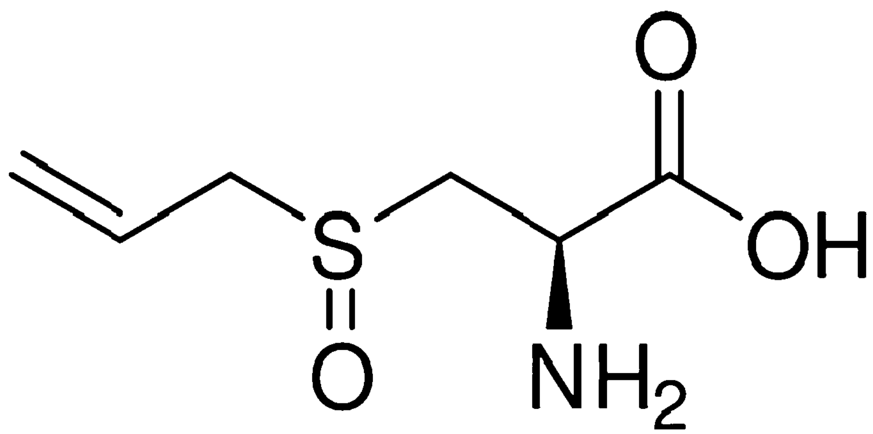

In view of promoting the production of S-allylcysteine, in the heating step, heating of the plant of the genus *Allium* or the like in which endogenous alliinase has been subjected to inactivation treatment needs to be performed at a temperature of 20 to 75°C. The heating temperature is preferably 25 to 65°C, more preferably 25 to 55°C, and still more preferably 30 to 45°C, for example.

Furthermore, it is more preferred to perform an additional heating step after performing the heating step in the above-mentioned temperature range. That is, the heating step is preferably performed in two stages. For example, it is preferred to perform a first heating step of heat-treating at a temperature in the range of 25 to 55°C for 10 to 30 hours, and

then additionally perform a second heating step of heating at a temperature in the range of 45 to 90°C, and more preferably in the range of 50 to 75°C, for 10 to 50 hours. By thus performing the heating step in two stages, the production reaction proceeds more efficiently, and S-allylcysteine can be obtained more efficiently in a shorter time than when the heating step is performed in one stage for a long time. It should be noted that when heating is performed at a temperature higher than 75°C in the first heating step, substantially no S-allylcysteine is produced. However, in the case where the heating step is performed in two divided stages, if heating in the first heating step is performed at a temperature not higher than 75°C, S-allylcysteine can be efficiently obtained even if heating in the subsequent second heating step is performed at a temperature higher than 75°C.

Heating in the heating step may be performed while stirring or while allowing to stand still. Examples of methods of stirring include, but are not specifically limited to, stirring using a stirring blade, a mixer, a stirrer, or the like.

The plant of the genus *Allium* or the like in the heating step preferably has a pH of about 2 to 12, more preferably 4 to 12, and still more preferably 7 to 9, for example. The heating time may vary depending on the type, amount, and the like of the raw material used, but usually, the heating time is preferably set in the range of about 1 to 48 hours.

The method may further include, prior to the heating step, an inactivation step of inactivating alliinase endogenous to at least one selected from the group consisting of the plant of the genus *Allium,* juice of the plant, and an extract of the plant.

The method of subjecting the endogenous alliinase to inactivation treatment is not specifically limited as long as it can inactivate the enzymatic activity of the alliinase endogenous to the plant of the genus *Allium*. Examples of the method of subjecting the endogenous alliinase to inactivation treatment include a heat treatment in which the internal temperature of the plant of the genus *Allium* or the like is increased to 60°C or more; an acid treatment; an alkali treatment; and the like; with the heat treatment being preferred. Specific examples of the heat treatment method in which the internal temperature of the plant of the genus *Allium* or the like is increased to 60°C or more in the inactivation treatment include a hot-water heat treatment, a steam heat treatment, a microwave heat treatment, and the like, with the microwave heat treatment being preferred. By the inactivation step, the plant of the genus *Allium* or the like in which endogenous alliinase has been inactivated can be obtained, which is then subjected to the heating step.

After the heating step, an isolation step of separating S-allylcysteine from the crude product can be performed. The isolation step may be performed by a common isolation process such as filtration, centrifugation, concentration, or extraction. Furthermore, in order to increase the purity of S-allylcysteine, a purification step of purifying S-allylcysteine can be performed. The purification step may be performed by a common purification process such as column chromatography or recrystallization. Alternatively, the crude product may be dried to obtain a solid (powder, granules, or the like) containing S-allylcysteine. Examples of drying methods include freeze drying and spray drying.

S-allylcysteine may also be a commercially available product.

The agent for inhibiting soil diseases of the present invention may consist only of the active ingredient described above, but may also contain, in addition to the active ingredient described above, amino acids, adjuvants, and the like according to the dosage form, application mode, and the like described below.

The content of the active ingredient in the agent for inhibiting soil diseases can be appropriately determined according to the dosage form, application mode, and the like described below. For example, the concentration of S-allylcysteine or a salt thereof in the agent for inhibiting soil diseases of the present invention is usually about 0.1 mg/L to 50 g/L, preferably about 0.1 mg/L to 5000 mg/L, and more preferably about 0.1 mg/L to 500 mg/L. Even when applied at such a low concentration, the agent for inhibiting soil diseases of the present invention can improve the soil disease-inhibitory effect on the plant to be protected. The soil disease-inhibitory effect on the plant to be protected can be sufficiently improved by applying the agent for inhibiting soil diseases of the present invention to the plant only once throughout the entire cultivation period of the plant; however, the agent for inhibiting soil diseases may be preferably applied a plurality of times to sufficiently increase the soil disease-inhibitory effect.

The dosage form of the agent for inhibiting soil diseases of the present invention is not specifically limited as long as it is an agriculturally acceptable dosage form. The dosage form includes, for example, liquid formulations, solid formulations, dust formulations, granular formulations, granules, wettable powders, flowables, emulsifiable concentrates, pastes, and dispersants.

The agent for inhibiting soil diseases of the present invention preferably further contains an amino acid or a salt thereof, together with S-allylcysteine or a salt thereof. It should be noted that this amino acid does not include S-allylcysteine. When the agent for inhibiting soil diseases of the present invention contains S-allylcysteine or a salt thereof and an amino acid or a salt thereof, or when the agent for inhibiting soil diseases of the present invention contains the below-described adjuvant in addition to S-allylcysteine or a salt thereof and an amino acid or a salt thereof, the agent for inhibiting soil diseases of the present invention can also be referred to as a composition for inhibiting soil diseases.

The amino acid is not specifically limited and may be an α-amino acid, a β-amino acid, a γ-amino acid, or the like. Examples of the amino acid include alanine (Ala), asparagine (Asn), aspartic acid (Asp), arginine (Arg), cysteine (Cys), glutamic acid (Glu), glutamine (Gln), glycine (Gly), histidine (His), isoleucine (Ile), leucine (Leu), lysine (Lys), methionine (Met), phenylalanine (Phe), proline (Pro), serine (Ser), threonine (Thr), tryptophan (Trp), tyrosine (Tyr), valine (Val), β-alanine, and γ-aminobutyric acid.

The amino acid may be of either the L- or D-form, or may be a mixture containing the L- and D-forms at any ratio. In general, the L-form is less expensive and more readily available than the D-form. Furthermore, as described in detail in the following Examples, the agent for inhibiting soil diseases containing the L-form has been confirmed to demonstrate a significant effect. In view of the above, all the amino acids contained in the agent for inhibiting soil diseases can be of the L-form.

In the broadest sense, naturally occurring amino acids can be broadly classified into hydrophilic (polar) amino acids and hydrophobic (non-polar) amino acids, based on the chemical characteristics of the side chain of each amino acid.

The hydrophilic (polar) amino acids are classified into amino acids having charged side chains and amino acids having polar uncharged side chains.

The amino acids having charged side chains include aspartic acid (Asp), glutamic acid (Glu), arginine (Arg), histidine (His), and lysine (Lys).

The amino acids having charged side chains can also be classified into acidic amino acids (aspartic acid (Asp) and glutamic acid (Glu)) and basic amino acids (arginine (Arg), histidine (His), and lysine (Lys)).

The amino acids having polar uncharged side chains are also referred to as neutral amino acids. The amino acids having polar uncharged side chains (neutral amino acids) include asparagine (Asn), glutamine (Gln), serine (Ser), threonine (Thr), and cysteine (Cys).

The hydrophobic (non-polar) amino acids include alanine (Ala), isoleucine (Ile), leucine (Leu), methionine (Met), valine (Val), phenylalanine (Phe), tryptophan (Trp), tyrosine (Tyr), glycine (Gly), and proline (Pro).

The hydrophobic (non-polar) amino acids may be classified into amino acids having aliphatic side chains (alanine (Ala), isoleucine (Ile), leucine (Leu), methionine (Met), and valine (Val)), amino acids having aromatic side chains (phenylalanine (Phe), tryptophan (Trp), and tyrosine (Tyr)), and other amino acids (glycine (Gly) and proline (Pro)).

The amino acid is preferably an amino acid having a charged side chain and/or an amino acid having a polar uncharged side chain.

Preferably, the amino acid having a charged side chain is glutamic acid.

The amino acid having a polar uncharged side chain is preferably one or more amino acids selected from the group consisting of cysteine, serine and asparagine.

The amino acid preferably contains one or more amino acids selected from the group consisting of cysteine, glutamic acid, serine, and asparagine.

As used herein, the form of the salt is not specifically limited, and the counterion may be a cation or an anion. Examples of the salt include inorganic salts (such as ammonium salts); alkali metal salts (such as sodium, potassium, and lithium salts), alkaline earth metal salts (such as calcium salt), metal salts (such as magnesium, aluminum, iron, zinc, copper, and nickel salts), halides (such as fluorides and chlorides), carboxylic acid salts (such as acetic acid salt), and organic amine salts (such as dibenzylamine, glucosamine, ethylenediamine, diethylamine, triethylamine, dicyclohexylamine, diethanolamine, and tetramethylammonium salts).

The agent for inhibiting soil diseases of the present invention preferably comprises an alkali metal salt of an amino acid as the salt of amino acid, and more preferably comprises a sodium salt of an amino acid.

The concentration of the amino acid or salt thereof in the agent for inhibiting soil diseases when applied to a plant or a vicinity thereof is preferably 1 to 5000 mg/L, more preferably 1 to 1000 mg/L, and still more preferably 1 to 500 mg/L.

The mass ratio between the S-allylcysteine or salt thereof and the amino acid or salt thereof, expressed as (S-allylcysteine or salt thereof) : (amino acid or salt thereof), is preferably 1:1000 to 1000:1, more preferably 1:100 to 100:1, and still more preferably 1:10 to 10:1, in view of improving solubility.

The agent for inhibiting soil diseases of the present invention may further optionally contain an adjuvant. Examples of the adjuvant include surfactants used as dispersants, wetting agents, spreaders, spreading/sticking agents, or the like, inert carriers, binders, tackifiers, thickeners, colorants, antifreeze/reconstitution agents, anticaking agents, disintegrating agents, stabilizing agents, pH regulators, and light stabilizers. Furthermore, since the agent for inhibiting soil diseases is typically formulated into a convenient form for agricultural use, it may contain a suitable inert carrier, and optionally a suitable proportion of the adjuvant. Examples of dosage forms include suspensions (flowables), emulsions in water (EW formulations), oil dispersions (OD formulations), suspoemulsion (SE) formulations, microemulsion (ME) formulations, emulsifiable concentrates, liquid formulations, wettable powders, water-dispersible granules, granules, dust formulations, tablets, and packs.

The agent for inhibiting soil diseases of the present invention may be a composition that is provided around an intended plant to promote the growth of bacteria that inhibit the growth of pathogens (such as *Fusarium* fungi) of soil diseases to achieve a high effect. The dosage form of the agent for inhibiting soil diseases when provided around a plant is not specifically limited, and the agent may be prepared into any form such as a liquid formulation, a dust formulation, or granules.

A surfactant is preferably used as the adjuvant.

Water-soluble surfactants can be used as the surfactant, for example, nonionic surfactants, cationic surfactants, anionic surfactants, and amphoteric surfactants.

Examples of nonionic surfactants include sorbitan fatty acid esters, polyoxyalkylene sorbitan fatty acid esters, polyoxyalkylene fatty acid esters, glycerin fatty acid esters, polyoxyalkylene glycerin fatty acid esters, polyglycerin fatty acid esters, polyoxyalkylene polyglycerin fatty acid esters, sucrose fatty acid esters, resin acid esters, polyoxyalkylene resin acid esters, polyoxyalkylene alkyl ethers, polyoxyalkylene alkylphenyl ethers, alkyl(poly)glycosides, and polyoxyalkylene alkyl(poly)glycosides. Preferred nonionic surfactants include ether group-containing nonionic surfactants containing no nitrogen atom; and ester group-containing nonionic surfactants. Particularly preferred nonionic surfactants include ester group-containing nonionic surfactants containing an oxyalkylene group, such as polyoxyalkylene sorbitan fatty acid esters, polyoxyalkylene fatty acid esters, polyoxyalkylene glycerin fatty acid esters, and polyoxyalkylene polyglycerin fatty acid esters; and ether group-containing nonionic surfactants containing no nitrogen atom and having a sugar backbone, such as alkyl(poly)glycosides.

Examples of cationic surfactants include alkyltrimethylammonium salts (for example, stearyltrimethylammonium chloride, lauryltrimethylammonium chloride, and the like); alkylpyridinium salts (for example, cetylpyridinium chloride, and the like); distearyl dimethyl ammonium chloride dialkyl dimethyl ammonium salts; poly(N,N'-dimethyl-3,5-methylene piperidinium) chloride; alkyl quaternary ammonium salts; alkyl dimethylbenzyl ammonium salts; alkyl isoquinolinium salts; dialkylmorpholinium salts; POE-alkylamines; alkylamine salts; polyamine fatty acid derivatives; amyl alcohol fatty acid derivatives; benzalkonium chloride; and benzethonium chloride.

Examples of anionic surfactants include carboxylic acid-based surfactants, sulfonic acid-based surfactants, sulfuric acid ester-based surfactants, and phosphoric acid ester-based surfactants. Examples of carboxylic acid-based surfactants include $C_{6-30}$ fatty acids or salts thereof, polycarboxylic acid salts, polyoxyalkylene alkyl ether carboxylic acid salts, polyoxyalkylene alkyl amide ether carboxylic acid salts, rosin acid salts, dimer acid salts, polymer acid salts, and tall oil fatty acid salts. Examples of sulfonic acid-based surfactants include alkylbenzenesulfonic acid salts, alkylsulfonic acid salts, alkylnaphthalenesulfonic acid salts, naphthalenesulfonic acid salts, diphenyl ether sulfonic acid salts, alkylnaphthalenesulfonic acid condensate salts, and naphthalenesulfonic acid condensate salts. Examples of sulfuric acid ester-based surfactants include alkyl sulfuric acid ester salts, polyoxyalkylene alkyl sulfuric acid ester salts, polyoxyalkylene alkyl phenyl ether sulfuric acid ester salts, tristyrenated phenol sulfuric acid ester salts, polyoxyalkylene distyrenated phenol sulfuric acid ester salts, and alkylpolyglycoside sulfuric acid salts. Examples of phosphoric acid ester-based surfactants include alkyl phosphoric acid ester salts, alkylphenyl phosphoric acid ester salts, polyoxyalkylene alkyl phosphoric acid ester salts, and polyoxyalkylene alkylphenyl phosphoric acid ester salts. Examples of the salts include metal salts (such as salts of Na, K, Ca, Mg, and Zn), ammonium salts, alkanolamine salts, and aliphatic amine salts. Preferred anionic surfactants are carboxylic acid-based surfactants and phosphoric acid ester-based surfactants.

Examples of amphoteric surfactants include amino acid-based surfactants, betaine-based surfactants, imidazoline-based surfactants, and amine oxide-based surfactants. Examples of amino acid-based surfactants include acylamino acid salts, acylsarcosine acid salts, acyloylmethylaminopropionic acid salts, alkylaminopropionic acid salts, and acylamide ethylhydroxyethylmethylcarboxylic acid salts. Examples of betaine-based surfactants include alkyldimethylbetaine, alkylhydroxyethylbetaine, acylamide propylhydroxypropylammonia sulfobetaine, acylamide propylhydroxypropylammonia sulfobetaine, and ricinoleic acid amide propyl dimethylcarboxy methylammonia betaine. Examples of imidazoline-based surfactants include alkylcarboxy methylhydroxy ethylimidazolinium betaine and alkylethoxy carboxy methylimidazolinium betaine. Examples of amine oxide-based surfactants include alkyldimethylamine oxide, alkyldiethanolamine oxide, and alkylamidopropylamine oxide.

The above-mentioned surfactants may be used alone or in combinations of two or more.

The concentration of the surfactant in the agent for inhibiting soil diseases when applied to a plant or a vicinity thereof is preferably 1 mg/L to 5000 mg/L, more preferably 1 mg/L to 1000 mg/L, and still more preferably 1 mg/L to 500 mg/L.

The mass ratio between the S-allylcysteine or salt thereof and the surfactant, expressed as (S-allylcysteine or salt thereof) : (surfactant), is preferably 1:1000 to 1000:1, more preferably 1:100 to 100:1, and still more preferably 1:10 to 10:1, in view of improving solubility.

In the present invention, a soil disease of a plant can be inhibited by supplying the agent for inhibiting soil diseases comprising S-allylcysteine or a salt thereof to the plant or a vicinity thereof.

The soil diseases for which the agent for inhibiting soil diseases of the present invention is intended are diseases caused by the growth of pathogens living in soil that have invaded plants through portions of the plants in contact with the soil, such as roots, underground stems, or stems. The soil diseases may also be referred to as soil-borne diseases.

Types of pathogens include viruses, bacteria, and filamentous fungi (molds).

Examples of diseases caused by infestation of viruses include wheat yellow mosaic disease.

Examples of diseases caused by infestation of bacteria include bacterial wilt disease and soft rot disease.

Examples of diseases caused by infestation of filamentous fungi include wilt disease, *Fusarium* wilt disease, damping-off disease, root rot disease, yellows disease, verticillium wilt disease, and the like caused by infestation of fungi

such as *Fusarium* spp., *Rhizoctonia* spp., *Verticillium* spp., and the like, and *Phytophthora* root and stem rot of soybean caused by a *Phytophthora* sp.

The agent for inhibiting soil diseases of the present invention has an excellent inhibitory effect on diseases caused by *Fusarium* spp. (hereinafter referred to as *Fusarium* diseases), *Phytophthora* root and stem rot of soybean, bacterial wilt disease, and the like.

*Fusarium* diseases are soil diseases caused by pathogenic *Fusarium* spp. Examples of pathogenic *Fusarium* spp. include *Fusarium oxysporum* and *F. solani (Fusarium solani),* and the like. The *Fusarium* spp. invade plants mainly through the roots and grow in the vessels to inhibit the passage of water, to cause symptoms such as yellowing and wilting of leaves, and sometimes death.

Examples of well-known *Fusarium* diseases include *Fusarium* wilt of tomato, *Fusarium* wilt of cucumber, melon, watermelon, sweet potato and the like, *Fusarium* wilt of strawberry, and *Fusarium* wilt of pumpkin, and the like. Other *Fusarium* diseases include Yellows of Japanese radish, cabbage, turnip, and *komatsuna* (Japanese mustard spinach), *Fusarium* wilt of *Allium* species and spinach, Root rot of butterhead lettuce and lettuce, Basal rot of Chinese chives, Rhizome rot of lotus root, and Panama disease of banana.

*Phytophthora* root and stem rot of soybean is a disease caused by a *Phytophthora* sp., which is one of filamentous fungi. The pathogen is pathogenic only to soybean. The disease develops from the seedling stage shortly after germination to the mature stage. The infection can begin pre-emergence and can cause non-germination. In the seedling stage, water-soaked streaks or oval lesions occur mainly at the basal portion of the stem, and large brown to dark brown lesions form later, which develop into damping-off disease. In a more mature soybean plant, the roots or the basal portion of the stem is affected and presents root rot symptoms.

Bacterial wilt disease is a disease caused by the *Ralstonia solanacearum* species complex, which is a pathogenic bacterium. Plants infected with the pathogenic bacterium of bacterial wilt disease rapidly wilt and die.

The plant for which the agent for inhibiting soil diseases of the present invention is intended is not specifically limited. Examples of useful plants for which the agent for inhibiting soil diseases of the present invention can be used include, but are not specifically limited to, plants in the family *Solanaceae,* such as tomatoes, eggplants, bell peppers, chili peppers, and potatoes; plants in the family *Poaceae,* such as rice, barley, wheat, rye, corn, and sugarcane; plants in the family *Fabaceae,* such as soybeans, adzuki beans, broad beans, peas, common beans, and peanuts; plants in the family *Rosaceae,* such as apples, pears, peaches, *ume,* cherries, strawberries, and roses; plants in the family *Brassicaceae,* such as cabbage, broccoli, Chinese cabbage, Japanese radish, turnip, and *komatsuna* (Japanese mustard spinach); plants in the family *Cucurbitaceae,* such as pumpkins, cucumbers, oriental melons, watermelons, and melons; plants in the family *Amaryllidaceae,* such as onions, leek, garlic, and Chinese chives; plants in the family *Lamiaceae,* such as perilla, basil, thyme, and lavender; plants in the family *Amaranthaceae,* such as spinach and sugar beet; plants in the family *Umbelliferae,* such as carrots and parsley; plants in the family *Asteraceae,* such as lettuce, burdocks, and chrysanthemum; plants in the family *Convolvulaceae,* such as sweet potatoes; and other examples include fruit trees, such as citruses, grapes, chestnuts, almonds, and bananas; root vegetables, such as taro and lotus roots; crops for processing use, such as cotton, hemp, hops, olives, rubber, coffee, and tea; pasture grasses, such as orchardgrass, sorghum, timothy, clover, and alfalfa; grasses, such as *Zoysia tenuifolia* and bentgrass; flavoring and ornamental crops, such as pepper and ginger; flowers and ornamental plants, such as carnations and orchids; garden trees, such as ginkgo, *Prunus* species, and *Aucuba japonica;* and forest trees, such as *Abies sachalinensis* species, *Picea jezoensis* species, *Pinus* species, hiba cedar, Japanese cedar, and Japanese cypress.

The agent for inhibiting soil diseases may be intended not only for the whole plants mentioned above, but also for at least one plant organ such as a flower, a leaf, a fruit, a stem, or a root.

The mode of application of the agent for inhibiting soil diseases of the present invention is not specifically limited as long as it is a known mode (or a mode that may be developed in the future) as a mode of use of an agrochemical or a fertilizer, and examples include spraying; dripping; applying; and mixing or dissolving the agent in a plant growth environment (such as in a soil or in a solid culture medium).

The present invention includes a method for inhibiting soil diseases, comprising supplying the agent for inhibiting soil diseases described above to a plant or a vicinity thereof (such as a soil in which the plant is grown). The onset of soil diseases can be effectively inhibited by using the method.

Since the agent for inhibiting soil diseases of the present invention is highly safe, it has substantially no constraints on its use, and can be used appropriately according to a conventionally known method. For example, when the agent is in the form of a liquid formulation, it can be provided around a plant by spraying or drenching. When the agent is in the form of granules or a dust formulation, it can be provided around a plant by spraying or burying.

The amount of the agent for inhibiting soil diseases of the present invention applied may vary depending on the concentration of the active ingredient, the timing of application, the number of times of application, the type of plant, the cultivation density, the growth stage, the method of application, and the like.

In the case of foliar application, the amount of the agent applied is preferably 100 L/ha to 7000 L/ha.

In the case of soil drenching, the amount of the agent applied is preferably 100 L/ha to 50000 L/ha.

The number of times of application is not specifically limited and may be once or a plurality of times, and can be appropriately set according to the development or sign of disease.

Examples

The present invention will be hereinafter described in more detail with examples and test examples; however, the technical scope of the present invention is not limited to these examples.

Test Example 1 (Examples 1 to 11 and Comparative Examples 1 and 2): Confirmation of Soil Disease-Inhibitory Effect (*Fusarium* Wilt of Cucumber)

6.68 mL of a 0.000548% (0.034 mM) aqueous solution of S-allylcysteine (Example 1), a mixture of a 0.000548% (0.034 mM) aqueous solution of S-allylcysteine and a 0.034 mM aqueous solution of each amino acid at a ratio of 1:1 (Examples 2 to 11), or a mixture of equal amounts of an aqueous amino acid solution and sterilized water (Comparative Example 1) was applied to 40 g of a soil containing microorganisms, and incubated at 25°C for 1 week. As a control, a soil to which the same amount of sterilized water was applied instead of the aqueous amino acid solution was also prepared (Comparative Example 2).

The soil containing S-allylcysteine (Example 1), the soils containing S-allylcysteine and amino acids (Examples 2 to 11), or the control soils (Comparative Examples 1 and 2) were each added in an amount of 6 g into a plant test tube with a diameter of 3 cm and a height of 12 cm, and drenched with 2 mL of a spore suspension (approximately $3 \times 10^4$ spores/mL) of the fungus of *Fusarium* wilt disease of cucumber (*Fusarium oxysporum* f. sp. *cucumerinum*).

Next, 2 mL of high-pressure sterilized vermiculite was overlaid on each of the soils, and each soil was seeded with cucumber seeds after hastening of germination. Then, 1 mL of a filter-sterilized liquid fertilizer (250-fold diluted Hyponex (registered trademark); N:P:K = 6:9:5) was applied into the plant test tubes. The test tubes were incubated for 4 weeks in a plant growth chamber under 25°C and 12-hour day length. During the incubation period, the state of disease development in the cucumber seedlings was observed daily, and evaluated according to the following four-level disease index:

0: No symptom
1: Yellowing or slight wilting of the cotyledons, or browning of the vessels was observed.
2: Yellowing or browning of the stem was observed.
3: Pre-emergence damping-off, or systemic wilting or death occurred.

Based on the disease index, the area under the disease progress curve (AUDPC) expressed by the following equation was calculated. In this test, ten seedlings were used for each group, and experiments were performed in triplicate.

$$\text{AUDPC} = \Sigma\,[(\text{disease index } i + \text{disease index } i - 1) \times (ti - ti - 1) \times 0.5] \qquad \text{Equation:}$$

* The disease indices i and i - 1 are the disease indices at time points ti and ti - 1, respectively, and ti and ti - 1 are consecutive days, with ti - ti - 1 = 1.

The effect was evaluated by comparing mean differences of the area under the disease progress curve (AUDPC), using the network meta-analysis (random effect model). The evaluation results are shown in Tables 1 and 2. A median (standardized mean difference) smaller than 0 (a negative value) indicates that the disease development was inhibited as compared to the control soil (Comparative Example 2).

[Table 1]

| Table 1 | Specimen | | | Mean Difference |
|---|---|---|---|---|
| | Agent for Inhibiting Soil Diseases | Amino Acid | | |
| Ex. 1 | S-allylcysteine | - | | -1.46 |
| Comp. Ex. 1 | - | Glutamic Acid | | 0.97 |
| Comp. Ex. 2 | - | - | Sterilized Water | 0 |

<Results>

The results in Table 1 confirmed that the agent for inhibiting soil diseases of Example 1 containing S-allylcysteine had a significant inhibitory effect on *Fusarium* diseases, which are one of soil diseases.

[Table 2]

| Table 2 | Agent for Inhibiting Soil Diseases | | Mean Difference |
|---|---|---|---|
| | S-allylcysteine | Amino Acid | |
| Ex. 2 | S-allylcysteine | Asparagine | -4.47 |
| Ex. 3 | S-allylcysteine | Aspartic Acid | -0.88 |
| Ex. 4 | S-allylcysteine | Cysteine | -3.78 |
| Ex. 5 | S-allylcysteine | Glutamine | -0.55 |
| Ex. 6 | S-allylcysteine | Glutamic Acid | -1.89 |
| Ex. 7 | S-allylcysteine | Histidine | -1.17 |
| Ex. 8 | S-allylcysteine | Isoleucine | -1.18 |
| Ex. 9 | S-allylcysteine | Leucine | -0.54 |
| Ex. 10 | S-allylcysteine | Serine | -2.06 |
| Ex. 11 | S-allylcysteine | Tyrosine | -1.39 |

<Results>

The results in Table 2 confirmed that the agents for inhibiting soil diseases of Examples 2 to 11 each containing S-allylcysteine and an amino acid also had a significant inhibitory effect on *Fusarium* diseases, which are one of soil diseases.

Test Example 2 (Examples 12 and 13): Influence of Difference in Soil on Soil Disease-Inhibitory Effect

Influence of difference in soil on the soil disease-inhibitory effect was evaluated using an agent for inhibiting soil diseases containing S-allylcysteine and glutamic acid (Example 12) and an agent for inhibiting soil diseases containing S-allylcysteine and asparagine (Example 13). As the agent for inhibiting soil diseases of Example 12, an aqueous solution obtained by mixing a 0.034 mM aqueous solution of S-allylcysteine and a 0.034 mM aqueous solution of glutamic acid at a ratio of 1:1 was used. As the agent for inhibiting soil diseases of Example 13, an aqueous solution obtained by mixing a 0.034 mM aqueous solution of S-allylcysteine and a 0.034 mM aqueous solution of asparagine at a ratio of 1:1 was used. As Comparative Example 3, sterilized water was used.

(Pot Test)

A sieved field soil (moisture content: about 35%) and a commercially available horticultural soil *(Saika-ichiban* (registered trademark), manufactured by Ibigawa Kogyo Co. Ltd.) were mixed in equal amounts. The agent for inhibiting soil diseases of Example 12 or 13 was applied in an amount of 25.05 mL to 150 g of the soil. As a control, a soil to which the same amount of sterilized water was applied instead of the agent for inhibiting soil diseases was also prepared (Comparative Example 3).

These soils were then incubated at 25°C for 1 week. Next, a plastic pot (9 cm in length $\times$ 9 cm in width $\times$ 8 cm in height) was filled with 300 g of the soil containing the agent for inhibiting soil diseases (Example 12 or 13) or the control soil (Comparative Example 3), and inoculated with 10 mL of a spore suspension (approximately $3 \times 10^5$ spores/mL) of the fungus of *Fusarium* wilt disease of cucumber *(Fusarium oxysporum* f. sp. *cucumerinum).*

10 mL of high-pressure sterilized vermiculite was overlaid on each of the soils, and the soil was seeded with four cucumber seeds after hastening of germination and then covered with a small amount of high-pressure sterilized vermiculite. These pots were cultivated in a plant growth chamber (25°C, 12-hour day length) for 4 weeks. During the cultivation period, the pots were irrigated with an appropriate amount of tap water every two days. The state of disease development of the cucumber seedlings was observed daily and evaluated.

For the evaluation, three types of soils, i.e., soil A, soil B, and soil C, having different biological and physicochemical properties were used. The soil A was a sandy/muddy soil collected from a vegetable field in *Gifu* Prefecture. The soil B was a sandy/muddy soil collected from a grass field in *Gifu* Prefecture. The soil C was an Andosol soil collected from a vegetable field in *Tottori* Prefecture. The evaluation items are the disease index shown below, the disease severity obtained using the disease index, and the AUDPC value.

In the present embodiment, the disease index was defined as follows. Each plant test tube was seeded with

cucumber seeds and inoculated with the fungus of *Fusarium* wilt disease of cucumber, and then incubated for 21 days in a plant growth chamber under 28°C and 12-hour day length, during which time the plant test tube was drenched with the agent for inhibiting soil diseases (Example 12 or 13) containing the combination of S-allylcysteine with another amino acid or with the same amount of sterilized water (Comparative Example 3) instead of the agent for inhibiting soil diseases, and incubated. After the incubation, the cucumber seedlings were collected, and the disease severity was calculated using numerical values expressed in terms of a three-level disease index. The evaluation criteria for the disease index are as follows:

0: No symptom
1: slight wilting
2: pre-emergence damping-off or death

The disease severity was calculated using the following equation:

$$\text{disease severity} = \Sigma\ (\text{disease index} \times \text{number of seedlings})/10 \times 100\% \qquad \text{Equation:}$$

The area under the disease progress curve (AUDPC) was calculated based on the value of disease severity, and the mean difference was evaluated.
The AUDPC was calculated using the following equation:
[Expression 1]

$$\text{Equation : AUDPC} = \sum_{i=1}^{n} \frac{(Y_i + Y_{i-1})(X_i - X_{i-1})}{2}$$

wherein n is the total number of tests, Y is the disease severity at the time of the test, and X is the number of days grown.
Table 3 and FIG. 1 show the AUDPC values (unitless) for the cases where the agent for inhibiting soil diseases containing S-allylcysteine and glutamic acid (Example 12) or the agent for inhibiting soil diseases containing S-allylcysteine and asparagine (Example 13) was applied to each of the soils A, B, and C. As Comparative Example 3, the AUDPC value for the case where sterilized water was applied is shown. FIG. 1 shows photographs used instead of figures, showing the growth state of the cucumber seedlings when the agent for inhibiting soil diseases was supplied to each of the soils A, B, and C.

[Table 3]

| Table 3 | Ex. 12 (S-allylcystein + Glutamic Acid) AUDPC (Disease Severity-Based) | Ex. 13 (S-allylcystein + Asparagine) AUDPC (Disease Severity-Based) | Comp. Ex. 3 (Sterilized Water) AUDPC (Disease Severity-Based) |
|---|---|---|---|
| Soil A | 21 | 13 | 42 |
| Soil B | 6 | 10 | 29 |
| Soil C | 9 | 17 | 24 |

<Results>

From the results in Table 3 and FIG. 1, differences in the degree of the effect depending on the type of the agent for inhibiting soil diseases were observed for each type of soil; however, both the agent for inhibiting soil diseases containing S-allylcysteine and glutamic acid (Example 12) and the agent for inhibiting soil diseases containing S-allylcysteine and asparagine (Example 13) were confirmed to have a significant inhibitory effect on *Fusarium* wilt of cucumber.

Test Example 3 (Examples 14 to 18 and Comparative Example 4)

Concentrations suitable for drenching were verified with respect to the agent for inhibiting soil diseases containing the combination of S-allylcysteine with glutamic acid.
For the verification of an optimal concentration, aqueous solutions obtained by adding each of S-allylcysteine and

glutamic acid to sterilized water at five serial concentrations of 0.00344 mM, 0.0344 mM, 0.344 mM, 3.44 mM, and 34.4 mM were used. Table 4 shows the results of the verification test using the random effect model.

[Table 4]

| Table 4 | S-allylcystein (mM) | Glutamic Acid (mM) | | Mean Difference |
|---|---|---|---|---|
| Ex. 14 | 0.00344 | 0.00344 | | -15.17 |
| Ex. 15 | 0.0344 | 0.0344 | | -13.92 |
| Ex. 16 | 0.344 | 0.344 | | -9.11 |
| Ex. 17 | 3.44 | 3.44 | | -13 |
| Ex. 18 | 34.4 | 34.4 | | -7.13 |
| Comp. Ex. 4 | | | Sterilized Water | 0 |

<Results>

As shown in Table 4, the aqueous solution prepared by adding 0.00344 mM each of S-allylcysteine and glutamic acid to sterilized water (Example 14) had the highest inhibitory effect on *Fusarium* wilt of cucumber, and the inhibitory effect decreased as the concentration increased. However, the results revealed that a certain effect was obtained even when using the aqueous solution having the highest concentration, i.e., 34.4 mM (Example 18).

Test Example 4 (Examples 19 to 21 and Comparative Example 5)

An optimal blend ratio between S-allylcysteine (sometimes abbreviated as SAC) and glutamic acid (sometimes abbreviated as Glu) in the agent for inhibiting soil diseases containing S-allylcysteine and glutamic acid was verified.

For the verification, aqueous solutions containing S-allylcysteine and glutamic acid at the following three blend ratios were used.

Example 19 SAC : Glu = 1:1 SAC (0.034 mM) + Glu (0.034 mM)
Example 20 SAC : Glu = 4:1 SAC (0.055 mM) + Glu (0.014 mM)
Example 21 SAC : Glu = 1:4 SAC (0.014 mM) + Glu (0.055 mM)

That is, the effect of inhibiting *Fusarium* diseases was verified using the three types of aqueous solutions, i.e., an aqueous solution with a molar ratio of S-allylcysteine to glutamic acid of 1:1 (Example 19), 4:1 (Example 20), or 1:4 (Example 21). The same verification was performed using sterilized water (Comparative Example 5) as a control group.

Table 5 shows the AUDPC values when incubation was performed for 14 days using cucumber seedlings and the fungus of *Fusarium* wilt of cucumber.

[Table 5]

| Table 5 | S-allyleystein (mM) | Glutamic Acid (mM) | Ratio | | AUDPC (Disease Severity-Based) |
|---|---|---|---|---|---|
| Ex. 19 | 0.034 | 0.034 | 1:1 | | 18 |
| Ex. 20 | 0.055 | 0.014 | 4:1 | | 40 |
| Ex. 21 | 0.014 | 0.055 | 1:4 | | 20 |
| Comp. Ex. 5 | | | | Sterilized Water | 43 |

<Results>

The results in Table 5 confirmed that the aqueous solution with a molar ratio of S-allylcysteine to glutamic acid of 1:1 (Example 19) and the aqueous solution with a molar ratio of S-allylcysteine to glutamic acid of 1:4 (Example 21) had a high disease inhibitory effect.

Test Example 5 (Example 22 and Comparative Example 6): *Phytophthora* Root and Stem Rot of Soybean

16.7 mL of an aqueous S-allylcysteine solution adjusted to 0.034 mM was applied to 200 g of a mixed soil (field soil : commercially available potting soil : vermiculite = 1:1:1 (mass ratio)), and the soil was incubated at 25°C for 1 week (Example 22). The same amount of sterilized water was applied to the soil of a control group (Comparative Example 6).

A pot was filled with 120 mL of each of these soils, and seeded with soybean seeds after hastening of germination. Next, the soil around the soybean seeds was drenched with 10 mL of a zoospore suspension (35 to 100 zoospores/mL) of the stem rot disease fungus *(Phytophthora sojae),* and the pot was drenched with water to be in a flooded state and then incubated for 5 days in a plant growth chamber with a light period of 16 hours/a dark period of 8 hours at 23°C. In this experiment, five seedlings were tested in each group. After the cultivation, the degree of browning of roots of the soybean seedlings was evaluated according to the following disease index of 0 to 4:

0: No symptom
1: Less than 1/4 of the roots browned.
2: 1/4 to less than 1/2 of the roots browned.
3: 1/2 to less than 3/4 of the roots browned.
4: 3/4 or more of the roots browned.

Furthermore, based on the disease index, the disease severity and the control value were calculated. The disease severity was calculated using the following equation:

$$\text{disease severity} = \Sigma\,(\text{disease index} \times \text{number of seedlings}) \times 100/(\text{number of investigated plants} \times 4) \qquad \text{Equation:}$$

Table 6 shows the results of the disease severity and the control value. The control value is a reduction in the disease severity of Example 22 (SAC group) relative to Comparative Example 6 (control group).

[Table 6]

| Table 6 | Disease Severity | Control Value |
|---|---|---|
| Ex. 22 | 35 | 53.3 |
| Comp. Ex. 6 (Control Group) | 75 | - |

<Results>

The results in Table 6 confirmed that the agent for inhibiting soil diseases of Example 22 containing S-allylcysteine had a significant inhibitory effect on *Phytophthora* root and stem rot of soybean, which is one of soil diseases.

Test Example 6 (Examples 23 and 24, and Comparative Examples 7 and 8): Bacterial Wilt Disease of Tomato

Next, it was confirmed whether the agent for inhibiting soil diseases of the present invention has an inhibitory effect on bacterial wilt disease of tomato.

The test for confirming the inhibitory effect on bacterial wilt disease of tomato was performed as follows.

Each of a 0.0344 mM aqueous S-allylcysteine solution alone (Example 23) and a mixed aqueous solution of S-allylcysteine and glutamic acid adjusted to 0.0344 mM (Example 24) was applied to a sieved field soil (3.34 mL/40 g), and incubated at 25°C for 1 week. Similarly, a soil to which an aqueous glutamic acid solution alone (Comparative Example 7) was applied, followed by incubation, was also prepared. As a control, a soil to which sterilized water was applied, followed by incubation, was used (Comparative Example 8).

A plant test tube (2.5 cm in diameter and 10 cm in height) was filled with 6 g of each of the soils to which the agent for inhibiting soil diseases (Example 23, Example 24, or Comparative Example 7) was applied or the soil to which sterilized water (Comparative Example 8) was applied, and the soil was drenched and inoculated with 2 mL of a cell suspension (optical density OD600nm = 0.1) of the bacterial wilt disease fungus *(Ralstonia pseudosolanacearum),* and overlaid with 3.4 g of sterilized vermiculite. The resulting soil was seeded with five seeds of tomato (variety: Ponderosa) after hastening of germination, and covered with a small amount of sterilized vermiculite. These test tubes were placed in a plant growth chamber (28°C, 12-hour day length) and incubated for 10 days.

Ten days after seeding, the tomato seedlings were collected, and evaluated using numerical values expressed in terms of a three-level disease index based on the degree of disease severity. The evaluation criteria are as follows:

0: No symptom
1: Slight necrosis was observed only in the cotyledons.
2: Pre-emergence damping-off or necrosis of the hypocotyls; Systemic wilting or death

Furthermore, based on the disease index, the disease severity was calculated using the following equation:

disease severity = Σ (disease index x number of seedlings)/10 × 100% Equation:

Table 7 shows the values of the average disease severity of bacterial wilt disease obtained by the confirmation test, for each agent for inhibiting soil diseases.

[Table 7]

| Table 7 | S-allylcystein | Amino Acid | | Average Disease Severity |
|---|---|---|---|---|
| Ex. 23 | S-allylcystein | | | 58 ± 11 |
| Ex. 24 | S-allylcystein | Glutamic Acid | | 46 ± 8 |
| Comp. Ex. 7 | | Glutamic Acid | | 78 ± 8 |
| Comp. Ex. 8 | | | Sterilized Water | 70 ± 7 |

<Results>

As shown in Table 7, the agent for inhibiting soil diseases containing S-allylcysteine alone (Example 23) and the agent for inhibiting soil diseases containing S-allylcysteine and glutamic acid (Example 24) were confirmed to have a significant effect of inhibiting bacterial wilt disease of tomato, as compared to sterilized water as a control group (Comparative Example 8).

<Production Examples>

The agent for inhibiting soil diseases containing S-allylcysteine and glutamic acid, among the agents for inhibiting soil diseases of the present invention, will be hereinafter described in detail.

Production Example 1

In Production Example 1, an agent for inhibiting soil diseases in the form of a liquid formulation was produced. The composition is as shown below:

| | |
|---|---|
| S-allyl-L-cysteine (manufactured by Tokyo Chemical Industry Co., Ltd.) | 0.17 parts by mass |
| L-glutamic acid (manufactured by Tokyo Chemical Industry Co., Ltd.) | 0.17 parts by mass |
| Water | 96.56 parts by mass |
| Propylene glycol (manufactured by TOHO Chemical Industry Co., Ltd.) | 3.00 parts by mass |
| 1,2-Benzisothiazolin-3-one (PROXEL (registered trademark) GXL(S), manufactured by Lonza) | 0.10 parts by mass |

The method for producing the agent for inhibiting soil diseases in the form of a liquid formulation includes the following:

(Step 1) dissolving S-allyl-L-cysteine and L-glutamic acid in water; and
(Step 2) adding propylene glycol and 1,2-benzisothiazolin-3-one to the aqueous solution obtained in Step 1, and mixing the mixture with stirring.

The method is specifically as follows:
0.17 parts by mass of each of S-allyl-L-cysteine (manufactured by Tokyo Chemical Industry Co., Ltd.) and L-glutamic acid

(manufactured by Tokyo Chemical Industry Co., Ltd.) was dissolved in 96.56 parts by mass of tap water. To this mixture, 3.0 parts by mass of propylene glycol (manufactured by Toho Chemical Industry Co., Ltd.) and 0.1 parts by mass of 1,2-benzisothiazolin-3-one (trade name: PROXEL (registered trademark) GXL (S), manufactured by Lonza) were added and mixed with stirring to obtain a liquid formulation.

Production Example 2

In Production Example 2, an agent for inhibiting soil diseases in the form of granules was produced. The composition is as shown below:

| | |
|---|---|
| S-allyl-L-cysteine (manufactured by Tokyo Chemical Industry Co., Ltd.) | 0.02 parts by mass |
| L-glutamic acid (manufactured by Tokyo Chemical Industry Co., Ltd.) | 0.02 parts by mass |
| Water | 5.50 parts by mass |
| Sodium dioctyl sulfosuccinate (Trade name: Newcol (registered trademark) 291PG, manufactured by Nippon Nyukazai Co., Ltd.) | 0.03 parts by mass |
| Granular pumice (trade name: KAGALITE (registered trademark) K-2, manufactured by Kagalite Kogyo Co., Ltd.) | 99.93 parts by mass |

The method for producing the agent for inhibiting soil diseases in the form of granules includes the following:

(Step 1) dissolving S-allyl-L-cysteine and L-glutamic acid in water;
(Step 2) adding sodium dioctyl sulfosuccinate to the aqueous solution obtained in Step 1, and mixing the mixture with stirring;
(Step 3) impregnating granular pumice with the mixed liquid obtained in Step 2; and
(Step 4) drying the impregnated granular pumice at 80°C.

The method is specifically as follows:
0.02 parts by mass of each of S-allyl-L-cysteine (manufactured by Tokyo Chemical Industry Co., Ltd.) and L-glutamic acid (manufactured by Tokyo Chemical Industry Co., Ltd.) was dissolved in 5.5 parts by mass of tap water. To this mixture, 0.03 parts by mass of sodium dioctyl sulfosuccinate (trade name: Newcol 291PG, manufactured by Nippon Nyukazai Co., Ltd.) was added and mixed with stirring. 99.93 parts by mass of granular pumice (trade name: KAGALITE K-2, manufactured by Kagalite Kogyo Co., Ltd.) was impregnated with the resulting liquid and then dried at 80°C to obtain granules.

Production Example 3

In Production Example 3, an agent for inhibiting soil diseases in the form of a dust formulation was produced. The composition is as shown below:

| | |
|---|---|
| S-allyl-L-cysteine (manufactured by Tokyo Chemical Industry Co., Ltd.) | 0.02 parts by mass |
| L-glutamic acid (manufactured by Tokyo Chemical Industry Co., Ltd.) | 0.02 parts by mass |
| Potassium sulfate (manufactured by FUJIFILM Wako Pure Chemical Corporation) | 99.96 parts by mass |

The agent for inhibiting soil diseases in the form of a dust formulation can be produced by mixing S-allyl-L-cysteine, L-glutamic acid, and potassium sulfate, and stirring the mixture.
The method is specifically as follows:
A plastic bag containing 0.02 parts by mass of each of S-allyl-L-cysteine (manufactured by Tokyo Chemical Industry Co., Ltd.) and L-glutamic acid (manufactured by Tokyo Chemical Industry Co., Ltd.), and 99.96 parts by mass of potassium sulfate (manufactured by FUJIFILM Wako Pure Chemical Corporation) was shaken to obtain a dust formulation.
Test Example 6 below describes an example in which the agent for inhibiting soil diseases in the form of a liquid formulation obtained in Production Example 1 was used to inhibit a *Fusarium* disease, which is one of soil diseases.

Test Example 6 (Example 25, Comparative Example 9, and Reference Example 1): *Fusarium* Wilt of Strawberry

The agent for inhibiting soil diseases obtained in Production Example 1 was used to evaluate the inhibitory effect

on *Fusarium* wilt of strawberry, which is one of *Fusarium* diseases. The method of using the agent for inhibiting soil diseases was as follows:
*Fusarium oxysporum forma specialis lycopersici,* which is the pathogen of *Fusarium* wilt of strawberry, was incubated and adjusted to 2.8 × $10^5$ cells/ml, and the soil was drenched with 500 ml of the pathogen per 0.4 $m^2$ plot to prepare a test soil. One month later, a 1,000-fold diluted solution of the agent for inhibiting soil diseases obtained in Production Example 1 was sprayed on the entire surface of the test soil at a rate of 2 L/$m^2$, and incorporated into the soil to obtain a soil of Example 25.

In Reference Example 1, "Benlate (registered trademark) wettable powder (manufactured by Sumitomo Chemical Gardening Co., Ltd.)", which is a formulation containing methyl 1-(butylcarbamoyl)benzimidazol-2-yl carbamate, was used to evaluate the inhibitory effect on yellows disease of strawberry. The method of using "Benlate wettable powder" was as follows: At the same time, a 500-fold diluted solution of "Benlate wettable powder" was sprayed on the entire surface of the test soil at a rate of 2 L/$m^2$, and incorporated into the soil to obtain a soil of Reference Example 1.

Furthermore, a soil not subjected to the *Fusarium* disease inhibitory treatment after drenching with the pathogen was used in Comparative Example 9 (control group).

Eight days after the preparation of the soil of Example 25 and the soil of Reference Example 1, ten strawberry seedlings were planted in each of the soils of Example 25, Reference Example 1, and Comparative Example 9 (control group), and the state of the seedlings was evaluated at weekly intervals from one week after planting to the sixth week. The evaluation items are the disease severity and the control value. Furthermore, during the evaluation, the seedlings were visually observed for phytotoxicity.

The disease severity was calculated using a disease index based on the observations of the appearance of the strawberry seedlings. The disease index was numerically expressed according to the following five levels:

0: No symptom
1: Slight distortion or yellowing of leaflets
2: Typical symptoms such as distortion or yellowing of leaflets
3: Plant dwarfing or wilting
4: Death

The equation for calculating the disease severity is shown below:

Equation: disease severity = Σ (number of diseased plants by the degree of severity × index) × 100/(number of investigated plants × 4) Eqaution:

The control value is a reduction in the disease severity of strawberries in the soil of Example 25 or Reference Example 1 relative to that of strawberries in the soil of Comparative Example 9 (control group).

The evaluation results of the inhibitory effect are shown in Table 8 below.

[Table 8]

| Table 8 | 4 Weeks after Planting | | 5 Weeks after Planting | | 6 Weeks after Planting | |
|---|---|---|---|---|---|---|
| | Disease Severity | Control Value | Disease Severity | Control Value | Disease Severity | Control Value |
| Ex. 25 | 8.3 | 78 | 15.8 | 76 | 21.7 | 68 |
| Ref. Ex. 1 | 14.2 | 63 | 23.3 | 65 | 34.2 | 50 |
| Comp. Ex. 9 | 38.3 | | 66.7 | | 68.3 | |

<Results>

As shown in Table 8, the agent for inhibiting soil diseases of Example 25 was confirmed to have a higher effect of inhibiting the development of *Fusarium* wilt of strawberry than in Comparative Example 9 (control group) or that of the material of Reference Example 1. Furthermore, the agent for inhibiting soil diseases of Example 25 was not observed to cause any phytotoxicity symptoms.

Test Example 7 (Example 26, Comparative Example 10, and Reference Example 2):

*Fusarium* Wilt of Cucumber

The agent for inhibiting soil diseases obtained in Production Example 1 was used to perform a test for confirming the inhibitory effect on *Fusarium* wilt of cucumber, which is one of *Fusarium* diseases. The method of using the agent for inhibiting soil diseases was as follows:
*Fusarium oxysporum,* which is the pathogen of *Fusarium* wilt of cucumber, was incubated at 30°C for 2 weeks. 500 g of the culture was incorporated into 1 kg of a sterilized soil, and the resulting soil was incorporated into 1.8 $m^2$ of soil per plot to prepare a test soil. A 1000-fold diluted solution of the agent for inhibiting soil diseases obtained in Production Example 1 was sprayed on the entire surface of the test soil at a rate of 2 $L/m^2$, and incorporated into the soil to obtain a soil of Example 26. Cucumber seedlings were planted in the soil of Example 26.
As a reference, the test soil was drenched with 150 ml of a 1000-fold diluted solution of "Benlate (registered trademark) wettable powder" per cucumber seedling, and used as a soil of Reference Example 2. Cucumber seedlings were planted in the soil of Reference Example 2. Furthermore, in Comparative Example 10 (control group), cucumber seedlings were planted in a test soil not subjected to the *Fusarium* disease inhibitory treatment.
The inhibitory effect on *Fusarium* wilt disease of cucumber was evaluated based on the disease severity and the control value for the cucumber seedlings. At the same time, the seedlings were visually observed for phytotoxicity.
The disease severity was calculated using the same equation as in Test Example 6, based on the disease index obtained by numerically expressing the observations of the wilting symptoms of the cucumber seedlings and the degree of vascular discoloration of cut stems of the cucumber seedlings. The disease index was numerically expressed based on the following five-level criteria:

0: No browning was observed.

1: Less than 1/3 of the vascular bundles browned.

2: 1/3 to 2/3 of the vascular bundles browned.

3: 2/3 or more of the vascular bundles browned.

4: The plant developed *Fusarium* wilt disease symptoms and died.

The control value was defined as a reduction in the disease severity in the soil of Example 26 or Reference Example 2 relative to that in the soil of Comparative Example 10 (control group). The evaluation results of the inhibitory effect are shown in Table 9 below.

[Table 9]

| Table 9 | Diseased Plant Rate (%) | Disease Severity | Control Value |
|---|---|---|---|
| Ex. 26 | 18.1 | 6.6 | 75 |
| Ref. Ex. 2 | 20.8 | 7.7 | 71 |
| Comp. Ex. 10 | 68.1 | 26.4 | |

<Results>

As shown in Table 9, the agent for inhibiting soil diseases of Example 26 was confirmed to have a higher effect of inhibiting the development of *Fusarium* wilt of cucumber than in Comparative Example 10 (control group) or that of the material of Reference Example 2. Furthermore, the agent for inhibiting soil diseases of Example 26 was not observed to cause any phytotoxicity symptoms.

Test Example 8 (Examples 27 to 29, Comparative Example 11, and Reference Example *3): Fusarium* Wilt of Sweet Potato

The agent for inhibiting soil diseases obtained in Production Example 1 was used to evaluate the inhibitory effect on *Fusarium* wilt of sweet potato. *Fusarium oxysporum forma specialis batatas,* which is the pathogen of *Fusarium* wilt of sweet potato, was incubated and adjusted to $5 \times 10^4$ bud-cells/ml, and a soil was drenched with the pathogen at a rate of 1 $L/m^2$. The resulting soil was used as a test soil.
The method of using the agent for inhibiting soil diseases was as follows:

Six days after the preparation of the test soil, Comparative Example 10 (control group), and three types of solutions, i.e., a 100-fold (Example 27), 1,000-fold (Example 28), or 10,000-fold (Example 29) diluted solution of the agent for inhibiting soil diseases obtained in Production Example 1, were prepared. These solutions were each separately sprayed on the entire surface of the test soil at a rate of 2 L/$m^2$, and incorporated into the soil to prepare three types of soils of the examples. Sweet potato seedlings were planted in the soils.

In Reference Example 3, the bases of sweet potato seedlings before planting were immersed in a 500-fold diluted solution of "Benlate (registered trademark) wettable powder" for 30 minutes, and then the seedlings were planted in the test soil. In Comparative Example 11 (control group), sweet potato seedlings were planted in a test soil not subjected to the *Fusarium* disease inhibitory treatment.

The evaluation was performed on day 120 after planting. The evaluation items are the degree of vascular browning and the control value. Furthermore, during the evaluation, the seedlings were visually observed for phytotoxicity.

The disease severity was calculated based on a vascular browning index obtained by observing and numerically expressing the browning of the vessels of cut stems of sweet potatoes. The degree of vascular browning was numerically expressed based on the following five-level evaluation criteria:

0: No vessel browned.

1: Less than 1/3 of the vessels browned.

2: 1/3 to 2/3 of the vessels browned.

3: 2/3 or more of the vessels browned.

4: Death

The equation for calculating the degree of vascular browning is shown below:

Equation: degree of vascular browning = $\Sigma$ (vascular browning index $\times$ number of plants for each index)/ (number of investigated plants $\times$ 4) $\times$ 100 Equation:

The control value was defined as a reduction in the degree of vascular browning in the soil of each of Examples 27 to 29 or Reference Example 3 relative to that in the soil of Comparative Example 11 (control group).

The evaluation results of the inhibitory effect are shown in Table 10 below.

[Table 10]

| Table 10 | Dilution Factor (fold) | Rate of Plants with Vascular Browning (%) | Degree of Vascular Browning | Control Value |
|---|---|---|---|---|
| Ex. 27 | 100 | 5 | 2.1 | 72 |
| Ex. 28 | 1000 | 6.7 | 2.5 | 67 |
| Ex. 29 | 10000 | 5 | 1.3 | 83 |
| Ref. Ex. 3 | 500 | 6.7 | 2.5 | 67 |
| Comp. Ex. 11 | | 18.3 | 7.5 | |

<Results>

As shown in Table 10, the agent for inhibiting soil diseases of each of Examples 27 to 29 was confirmed to have a higher effect of inhibiting the development of *Fusarium* wilt of sweet potato than in Comparative Example 11 (control group) or that of the material of Reference Example 3. Furthermore, the agents for inhibiting soil diseases of Examples 27 to 29 were not observed to cause any phytotoxicity symptoms.

Test Example 9 (Example 30, Comparative Example 12, and Reference Example 4): *Fusarium* Wilt of Spinach

The agent for inhibiting soil diseases obtained in Production Example 1 was used to evaluate the inhibitory effect

on *Fusarium* wilt of spinach, which is one of *Fusarium* diseases. *Fusarium oxysporum forma specialis spinaciae* SP1 strain, which is the pathogen of *Fusarium* wilt of spinach, was incubated in bran or a soil medium at 25°C for 3 weeks, and the resulting soil was mixed with a horticultural soil "Soil-friend (registered trademark)" (manufactured by Sankensoiru. Co. Ltd.) at a mass ratio of 1:5. The resulting mixture was used as a test soil.

The method of using the agent for inhibiting *Fusarium* diseases was as follows:
The test soil was thinly spread on a sheet, and a 1000-fold diluted solution of the agent for inhibiting soil diseases obtained in Production Example 1 was sprayed on the entire surface of the test soil at a rate of 2 L/$m^2$, and incorporated into the test soil by mixing to prepare a soil of Example 30. A cell tray was filled with the soil of Example 30 and then seeded with spinach seeds.

As a reference, a cell tray was filled with the test soil, and then a 1000-fold diluted solution of "Benlate (registered trademark) wettable powder" was sprayed on the test soil at a rate of 2 L/$m^2$ to obtain a soil of Reference Example 4. The soil of Reference Example 4 was seeded with spinach seeds. Furthermore, in Comparative Example 12 (control group), spinach seeds were planted in a test soil not subjected to the *Fusarium* disease inhibitory treatment.

The inhibitory effect on *Fusarium* wilt of spinach was evaluated based on the seedling rate of spinach 15 days after spraying of the agent for inhibiting soil diseases and the wilt or death rate of the plants 38 days after spraying of the agent for inhibiting soil diseases. The control value was defined as a reduction in the wilt or death rate in the soil of Example 30 or Reference Example 4 relative to that in the soil of Comparative Example 12 (control group). Furthermore, the seedlings were visually observed for phytotoxicity.

The evaluation results of the inhibitory effect are shown in Table 11 below.

[Table 11]

| Table 11 | Seedling Rate (%) | Wilt/ Death Rate (%) | Control Value |
|---|---|---|---|
| Ex. 30 | 82 | 16.7 | 78 |
| Ref. Ex. 4 | 74.7 | 59.1 | 22 |
| Comp. Ex. 12 | 56.3 | 75.5 | |

<Results>

As shown in Table 11, the agent for inhibiting soil diseases of Example 30 was confirmed to have a higher effect of inhibiting the development of wilt disease of spinach than that in Comparative Example 12 (control group) or the material of Reference Example 4. Furthermore, the agent for inhibiting soil diseases of Example 30 was not observed to cause any phytotoxicity symptoms.

<u>Test Example 10 (Example 31, Comparative Example 13, and Reference Example 5): Rhizome Rot of Lotus Root</u>

The agent for inhibiting soil diseases obtained in Production Example 1 was used to perform a test for confirming the inhibitory effect on Rhizome rot of lotus root, which is one of *Fusarium* diseases. The method of using the agent for inhibiting soil diseases was as follows:
*Fusarium oxysporum,* which is the pathogen of Rhizome rot of lotus root, was incubated in a soil-bran medium at 25°C for 32 days under dark conditions to prepare a test soil. A 1000-fold diluted solution of the agent for inhibiting soil diseases obtained in Production Example 1 was sprayed on the entire surface of the test soil at a rate of 2 L/$m^2$, and incorporated into the soil to obtain a soil of Example 30. Lotus roots were planted in the soil of Example 31.

In Comparative Example 13 (control group), lotus roots were planted in a test soil not subjected to the *Fusarium* disease inhibitory treatment. Furthermore, lotus roots were planted in a soil not inoculated with the pathogen of Rhizome rot of lotus root, and grown to seedlings under the same conditions to examine for rhizome rot.

After 157 days from planting, lotus root tubers were collected, and the inhibitory effect on the *Fusarium* disease was evaluated based on the diseased tuber rate (%), which is the percentage of the number of tubers that developed Rhizome rot of lotus root. The control value was calculated from the average value of the diseased plant rate. At the same time, the plants were visually observed for phytotoxicity.

The evaluation results of the inhibitory effect are shown in Table 12 below.

[Table 12]

| Table 12 | Number of Evaluated Tubers | Number of Diseased Tubers | Diseased Tuber Rate (%) | Control Value |
|---|---|---|---|---|
| Ex. 31 | 292 | 5 | 1.7 | 66 |

(continued)

| Table 12 | Number of Evaluated Tubers | Number of Diseased Tubers | Diseased Tuber Rate (%) | Control Value |
|---|---|---|---|---|
| Ref. Ex. 5 (Non-Inoculated Plot) | 339 | 1 | 0.3 | |
| Comp. Ex. 13 | 259 | 13 | 5 | |

As shown in Table 12, the agent for inhibiting soil diseases of Example 31 was confirmed to have an inhibitory effect on rhizome rot disease of lotus root. Furthermore, the agent for inhibiting soil diseases of Example 31 was not observed to cause any phytotoxicity symptoms.

Test Example 11 (Examples 32 to 35 and Comparative Example 14): Panama Disease of Banana

The agent for inhibiting soil diseases obtained in Production Example 1 was used to perform a test for confirming the inhibitory effect on Panama disease of banana, which is one of *Fusarium* diseases. A test soil was prepared by inoculating with *Fusarium oxysporum forma specialis cubense,* which is the pathogen of Panama disease of banana, and planted with 12 two-month-old banana seedlings per plot.

The method of using the agent for inhibiting soil diseases was as follows:
Two types of solutions, i.e., a 1000-fold or 5000-fold diluted solution of the agent for inhibiting soil diseases obtained in Production Example 1, were prepared. These solutions were provided to the banana seedlings at the following four levels of application rates:
Example 32 (Plot 1): Each one of the banana plants was treated once with 2 L of the 1000-fold diluted solution.

Example 33 (Plot 2): Each one of the banana plants was treated once with 4 L of the 1000-fold diluted solution.

Example 34 (Plot 3): Each one of the banana plants was treated three times at monthly intervals with 2 L of the 1000-fold diluted solution.

Example 35 (Plot 4): Each one of the banana plants was treated once with 2 L of the 5000-fold diluted solution.

In Comparative Example 14 (control group), a plot not treated with the agent for inhibiting soil diseases was used.

The stems of the bananas were cut 180 days after planting, and the state of discoloration of the individual corms was observed to evaluate the disease index for each banana plant. The disease index was evaluated according to the following criteria as defined by the "International Network for the Improvement of Banana and Plantain (INIBAP)":

1: No vascular discoloration
2: Discoloration only in the junction between the roots and rhizome
3: Less than 1/3 of the vessels browned.
4: 1/3 to 2/3 of the vessels browned.
5: 2/3 or more of the vessels browned.
6: Overall discoloration of the tissue

Based on the evaluation results, the disease index was calculated using the following equation:

disease severity = $\Sigma$ (index of evaluation $\times$ number of banana plants for each index)/(total number of plants $\times$ 6) $\times$ 100 Equation:

Furthermore, at the same time, the plants were visually observed for phytotoxicity symptoms.

The evaluation results of the inhibitory effect are shown in Table 13 below.

[Table 13]

| Table 13 | Disease Severity |
|---|---|
| Ex. 32 | 35.42 |
| Ex. 33 | 35.42 |
| Ex. 34 | 35.42 |
| Ex. 35 | 37.5 |

(continued)

| Table 13 | Disease Severity |
|---|---|
| Comp. Ex. 14 | 58.33 |

<Results>

As shown in Table 13, the agents for inhibiting soil diseases of Examples 32 to 35 were confirmed to have an inhibitory effect on Panama disease of banana. Furthermore, the agents for inhibiting soil diseases of Examples 32 to 35 were not observed to cause any phytotoxicity symptoms.

Although the agent for inhibiting soil diseases of the present invention has been described in detail above, the agent for inhibiting soil diseases as set forth in the claims can contain various materials other than those described in the examples and examples of use. Moreover, the blend ratio of the materials can be changed as appropriate, and the dosage form can be selected from known ones. Although the method of providing the agent for inhibiting soil diseases of the present invention has been described in detail with particular reference to the use of a liquid formulation, the agent for inhibiting soil diseases can be supplied to the soil in the form of a dust formulation or granules as exemplified in the examples.

Industrial Applicability

The agent for inhibiting soil diseases of the present invention can be used as a substitute for an agrochemical, a soil conditioner, or the like.

## Claims

1. An agent for inhibiting soil diseases comprising S-allylcysteine or a salt thereof.

2. The agent for inhibiting soil diseases according to claim 1, further comprising an amino acid or a salt thereof.

3. The agent for inhibiting soil diseases according to claim 2, wherein the amino acid or salt thereof is an amino acid having a charged side chain or a salt thereof and/or an amino acid having a polar uncharged side chain or a salt thereof.

4. The agent for inhibiting soil diseases according to claim 3, wherein the amino acid having a charged side chain or salt thereof is glutamic acid or a salt thereof.

5. The agent for inhibiting soil diseases according to claim 3, wherein the amino acid having a polar uncharged side chain or salt thereof is one or more amino acids selected from the group consisting of cysteine, serine, and asparagine, or salts thereof.

6. The agent for inhibiting soil diseases according to claim 2, wherein the amino acid or salt thereof contains one or more amino acids selected from the group consisting of cysteine, glutamic acid, serine, and asparagine, or salts thereof.

7. A method for inhibiting soil diseases, comprising supplying the agent for inhibiting soil diseases according to any one of claims 1 to 6 to a plant or a vicinity thereof.

8. A method for treating a plant or a vicinity thereof with the agent for inhibiting soil diseases according to any one of claims 1 to 6.

9. A method for enhancing a soil disease-inhibitory effect, by using an amino acid or a salt thereof with an agent for inhibiting soil diseases comprising S-allylcysteine or a salt thereof.

10. A method of using S-allylcysteine or a salt thereof for inhibiting soil diseases.

[FIG.1]

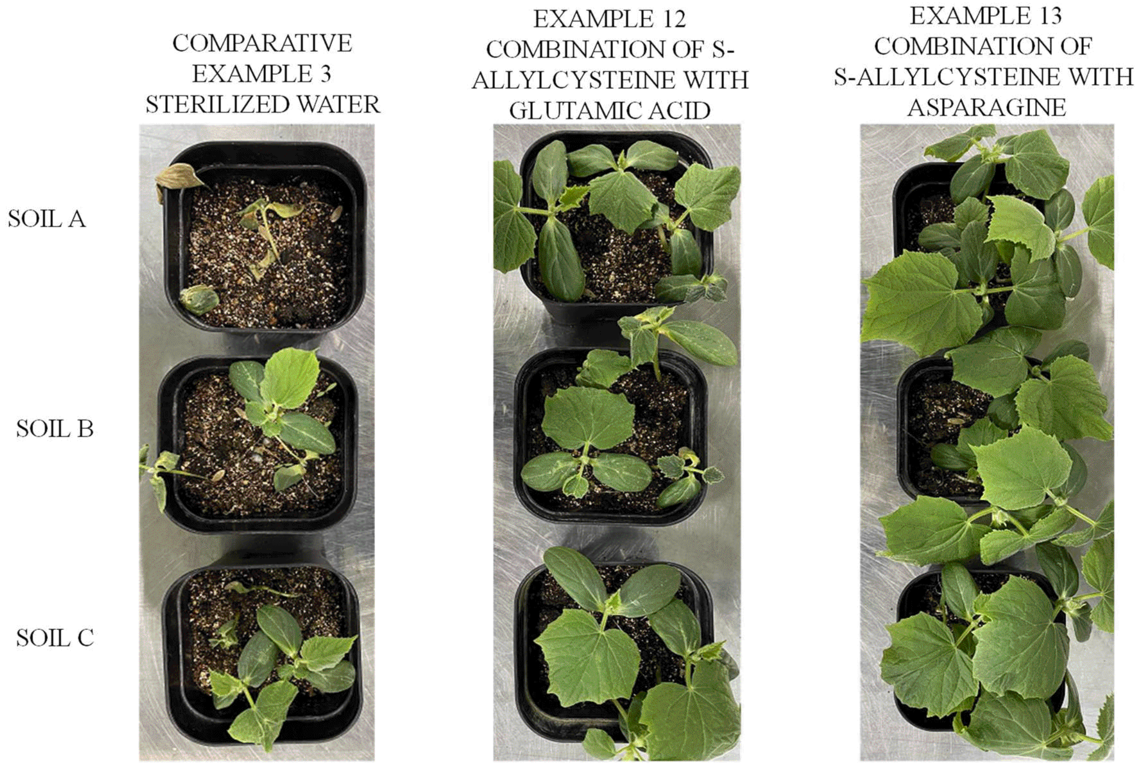
COMPARATIVE EXAMPLE 3 STERILIZED WATER
EXAMPLE 12 COMBINATION OF S-ALLYLCYSTEINE WITH GLUTAMIC ACID
EXAMPLE 13 COMBINATION OF S-ALLYLCYSTEINE WITH ASPARAGINE
SOIL A
SOIL B
SOIL C

## INTERNATIONAL SEARCH REPORT

International application No.
**PCT/JP2024/027698**

**A. CLASSIFICATION OF SUBJECT MATTER**

***A01N 37/44***(2006.01)i; ***A01N 43/50***(2006.01)i; ***A01P 3/00***(2006.01)i
FI: A01N37/44; A01P3/00; A01N43/50 L

According to International Patent Classification (IPC) or to both national classification and IPC

**B. FIELDS SEARCHED**

Minimum documentation searched (classification system followed by classification symbols)

A01N1/00-65/48, A01P1/00-23/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII), CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X | CN 107136132 A (HUBEI QINLAONONGFU ECOLOGICAL AGRICULTURAL CO., LTD.) 08 September 2017 (2017-09-08)<br>claims 1-4, paragraph [0010] | 1-10 |
| X | CN 104920512 A (MA'ANSHAN YIHEYUAN AGRICULTURE DEVELOPMENT CO., LTD.) 23 September 2015 (2015-09-23)<br>claim 1, paragraph [0008] | 1-10 |
| X | CN 106281344 A (HU, D.) 04 January 2017 (2017-01-04)<br>claims 1, 2, paragraph [0008] | 1-10 |
| X | CN 108707007 A (GUIYANG KAILIN FERTILIZER CO., LTD.) 26 October 2018 (2018-10-26)<br>claims 1, 2, 4, paragraphs [0001], [0022] | 1-10 |
| X | CN 113519539 A (LIYANG ZHONGNAN CHEMICAL INDUSTRY CO., LTD.) 22 October 2021 (2021-10-22)<br>claims 1-4, paragraphs [0031], [0101]-[0136] | 1-10 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 October 2024** | **15 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No.
**PCT/JP2024/027698**

**C. DOCUMENTS CONSIDERED TO BE RELEVANT**

| Category* | Citation of document, with indication, where appropriate, of the relevant passages | Relevant to claim No. |
|---|---|---|
| X | JP 09-067220 A (TSUMURA & CO.) 11 March 1997 (1997-03-11) claims 1-3, examples | 1-10 |
| X | US 2008/0260876 A1 (BENHAMOU, N.) 23 October 2008 (2008-10-23) claims 1, 13, paragraphs [0050]-[0053], example 2 | 1-10 |
| P, X | CN 116941371 A (ZHEJIANG UNIVERSITY) 27 October 2023 (2023-10-27) claims 1-7, examples | 1, 7, 8, 10 |
| A | JP 2018-535673 A (PARK, H.) 06 December 2018 (2018-12-06) | 1-10 |
| A | JP 2005-110648 A (ISSI CORPORATION) 28 April 2005 (2005-04-28) | 1-10 |

Form PCT/ISA/210 (second sheet) (July 2022)

**INTERNATIONAL SEARCH REPORT**
**Information on patent family members**

International application No.
**PCT/JP2024/027698**

| Patent document cited in search report | Publication date (day/month/year) | Patent family member(s) | Publication date (day/month/year) |
|---|---|---|---|
| CN 107136132 A | 08 September 2017 | (Family: none) | |
| CN 104920512 A | 23 September 2015 | (Family: none) | |
| CN 106281344 A | 04 January 2017 | (Family: none) | |
| CN 108707007 A | 26 October 2018 | (Family: none) | |
| CN 113519539 A | 22 October 2021 | (Family: none) | |
| JP 09-067220 A | 11 March 1997 | (Family: none) | |
| US 2008/0260876 A1 | 23 October 2008 | WO 2006/102766 A1<br>EP 1871395 A1<br>CA 2604352 A | |
| CN 116941371 A | 27 October 2023 | (Family: none) | |
| JP 2018-535673 A | 06 December 2018 | WO 2017/095021 A1<br>KR 10-1728243 B<br>CN 108347978 A | |
| JP 2005-110648 A | 28 April 2005 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H6287097 A